# EUROPEAN PATENT SPECIFICATION

(11) **EP 2 205 375 B1**
(45) Date of publication and mention of the grant of the patent: **27.06.2012**
(21) Application number: 08802789.1
(22) Date of filing: 06.10.2008
(51) Int. Cl.: B21D 24/02, B30B 15/02, F16F 9/06, F16F 9/48

(54) **HYDRO-PNEUMATIC CYLINDER WITH CONTROLLED STOP POSITION**
HYDROPNEUMATISCHER ZYLINDER MIT GESTEUERTER STOPP-POSITION
BOUTEILLE À GAZ À ARRÊT COMMANDÉ

(30) Priority: 04.10.2007 ES 200702601
(43) Date of publication of application: 14.07.2010
(73) Proprietor: Nitrogas, S.A. Unipersonal, 01510 Miñano Alava (ES)
(72) Inventor: VALOR VALOR, Antonio, E-20500 Mondragon (Gipuzkoa) (ES); GABICAGOGEASCOA BENITO, Alberto, E-48012 Bilbao (Bizkaia) (ES)
(74) Representative: Igartua, Ismael
(86) International application number: PCT/EP2008/008412
(87) International publication number: WO 2009/043594

(56) References cited:
- EP-A- 1 598 124
- US-A- 4 040 523
- US-A- 5 027 637

## Description

### TECHNICAL FIELD

The present invention relates to gas cylinders, generally used in forming material and of the controlled-stop type, so that the movement of a rod of said cylinders to its original position may be controlled without it affecting the piece being produced.

### PRIOR ART

Gas cylinders comprise a cylinder body and a rod that moves axially inside said body when a force or pressure is exerted on it, for example, during a material forming process in which a piece is obtained by means of at least one blow. An upper die or punch, for example, may strike against a lower die or mould, underneath which are disposed the gas cylinders, the rod of which is displaced when said lower die suffers the blow exerted by the upper die.

Gas cylinders also comprise a gas chamber, said gas being compressed when the rod moves as a result of the effect of the pressure exerted on it, or said gas being decompressed when said pressure is no longer exerted and the rod returns to its original position.

Gas cylinders are known in which, when the rod no longer has a pressure or force exerted on it, the gas in the cylinder chamber is decompressed, thus causing a new movement of the rod in the opposite direction, the result being that it returns to its original position. This may cause serious problems in the piece obtained during the material forming process, with the possibility that it may be deformed if the rod hits it when it is returning to its original position, for example.

Gas cylinders with a controlled-stop are also known, so that the moment at which the rod returns to its original position may be controlled, thereby preventing the deformation of the piece obtained by said rod. ES2216673A1, for example, discloses a cylinder of this type. Said gas cylinder comprises two main chambers and an accumulator with a chamber that is communicated with the two main chambers by means of two ducts, it being possible to adjust the pressure compensation between the chambers in order to control the movement of the rod of the cylinder. Each duct comprises an electric valve that changes the pressures of the chambers, the result being that by opening or closing said electric valves the rod of the cylinder may or may not be allowed to return to its original position. When installing said gas cylinder sufficient space must be left in order to dispose the body of the cylinder, the accumulator, the electric valves and the ducts, something that is often complicated and which also makes said installation complex.

A gas cylinder showing the features at the preamble of claim 1 is known from EP 1 598 124 A1.

### DISCLOSURE OF THE INVENTION

It is the object of the invention to provide a controlled-stop gas cylinder that solves at least some of the drawbacks of the prior art.

The gas cylinder of the invention comprises a hollow cylindrical body, a body base fixed to a first end of the body, and a rod that is axially movable inside the body from a rest position to a stop position and vice versa. Said cylinder also comprises a main chamber that comprises in its interior at least one pressurised fluid when said rod is in the rest position, said fluid exerting a pressure on said rod in order to keep it in the rest position, an auxiliary chamber independent to the first chamber, and a flow duct that connects both chambers, the fluid of the main chamber being able to pass to the auxiliary chamber through said flow duct when the rod moves towards the stop position, and said flow duct being disposed inside said rod. When the rod is in the stop position the fluid present in the auxiliary chamber exerts a pressure on said rod in order to keep it in said stop position, against the pressure the fluid of the main chamber exerts on said rod.

The cylinder also comprises closure means linked to the body base and designed to close the flow duct when the rod reaches the stop position, thereby preventing the communication between the main chamber and the auxiliary chamber, and, therefore, preventing the passage of fluid from one chamber to the other. When the flow duct is closed, said closure means also cause an increase in the volume of the main chamber, causing the fluid present in said main chamber to expand.

The main chamber comprises a gaseous fluid and an oily fluid in its interior when the rod is in the rest position, only comprising oily fluid when said rod is in the stop position.

The compression property of an oily fluid is lower than that of a gaseous fluid, which means that when the volume of the main chamber increases when the rod is in the stop position, and the oily fluid present in said main chamber expands, the pressure of said oily fluid is lower than that of the gaseous fluid of the auxiliary chamber, thereby preventing any movement of the rod to the rest position that may cause damage to a piece, when the flow duct is closed, the stopping of the rod of the cylinder being controlled. Thus, the stopping of said rod may be controlled without the need to add an external accumulator to the cylinder of the invention, thus making the cylinder easier to install.

These and other advantages and characteristics of the invention will be made evident in the light of the drawings and the detailed description thereof.

### DESCRIPTION OF THE DRAWINGS

Figure 1 is a sectional view of an embodiment of the cylinder of the invention, with the rod in a rest position.
Figure 2 is a sectional view of the cylinder of Figure 1, with the rod in a stop position.

### DETAILED DISCLOSURE OF THE INVENTION

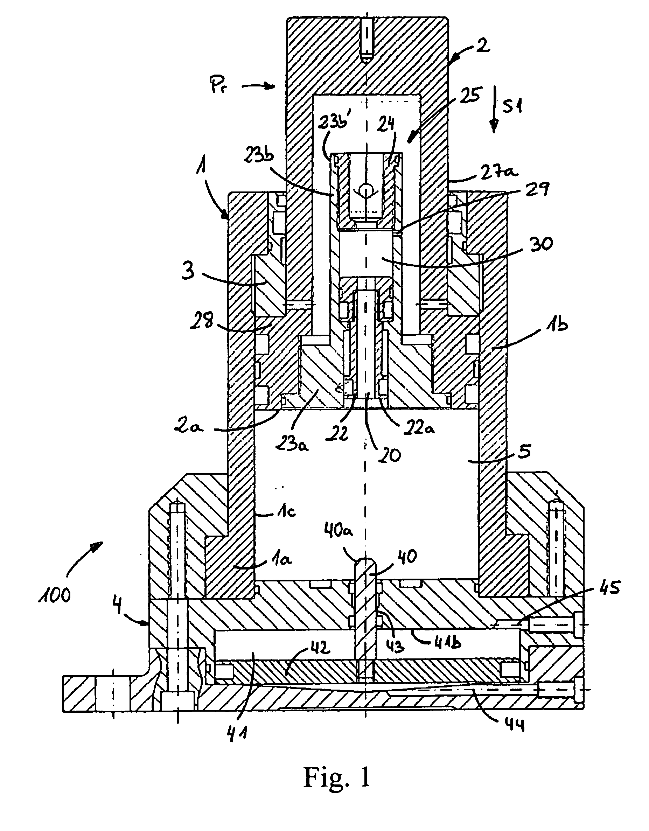

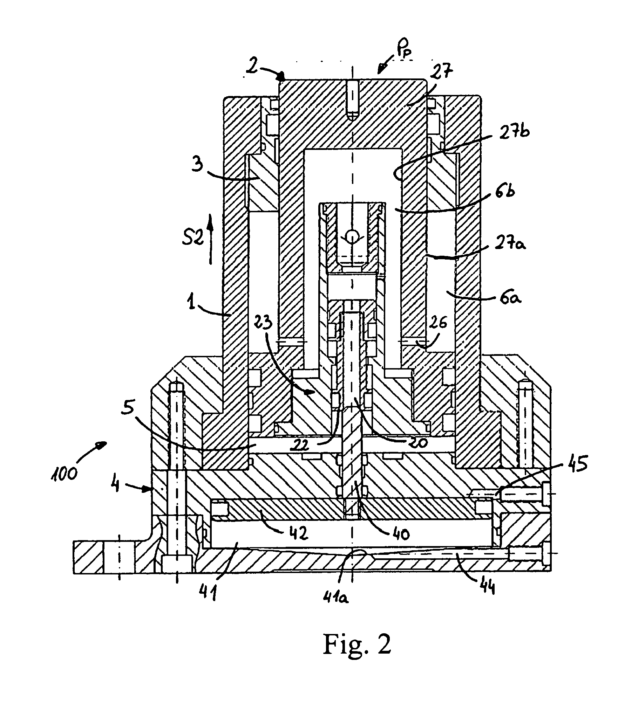

Figures 1 and 2 show an embodiment of the gas cylinder 100 of the invention. The cylinder 100 comprises a hollow cylinder body 1, preferably cylindrical, a body base 4 fixed to a first end la of the cylinder body 1, although it may also form part of said cylinder body 1, and a rod 2 that is axially movable inside the cylinder body 1 from a rest position Pr shown in Figure 1 to a stop position Pp shown in Figure 2, towards the body base 4 in a stop direction S1, or from the stop position Pp to the rest position Pr in a release direction S2, and which comprises an axial rod body 27 and a ring-shaped rod base 28 fixed to one end of said rod body 27. The cylinder 100 also comprises a main chamber 5 inside the cylinder body 1, which comprises at least one pressurised fluid in its interior when said rod 2 is in the rest position Pr, an auxiliary chamber 6a, 6b independent to the main chamber 5, and a flow duct 20 that is disposed inside the rod 2 and which communicates the main chamber 5 with the auxiliary chamber 6a, 6b, the fluid of the main chamber 5 being able to pass to the auxiliary chamber 6a, 6b when the rod 2 moves towards the stop position Pp through said flow duct 20, or vice versa. The fluid of the main chamber 5 exerts a release force in the release direction S2 on the rod 2, while the fluid of the auxiliary chamber 6a, 6b exerts a stopping force in the stop direction S1 on said rod 2. When the rod 2 is in the stop position Pp, the release force and the stopping force are balanced, said rod 2 remaining static. When the rod 2 is in the rest position Pr, the release force is greater than the stopping force, it being necessary to apply an external force in the stop direction S1 greater than said release force in order to move said rod 2 in the stop direction S1 towards the stop position Pp.

When the rod is in the rest position Pr, stopper means 3 disposed in a second end 1b of the cylinder body 1, opposite to the first end 1a, prevent the rod 2 from coming out of said cylinder body 1, thereby limiting its movement in the release direction S2. The stopper means 3 may be, for example, a retainer bushing, such as the one shown in the figures, which is fixed to the second end 1b inside the cylinder body 1, or alternatively the cylinder body 1 itself may comprise a shape similar to that of the retainer bushing on said second end 1b.

The main chamber 5 comprises a pressurised gaseous fluid and a pressurised oily fluid in its interior when the rod 2 is in the rest position Pr, the volume of the oily fluid being greater or substantially the same as the total volume of the main chamber 5 when the rod 2 is in the stop position Pp. Due to the properties of both fluids, when the rod 2 moves in the stop direction S1 the first fluid that passes to the auxiliary chamber 6a, 6b through the flow duct 20 is the gaseous fluid, so that when said rod 2 reaches the stop position Pp, only the oily fluid is present in the main chamber 5, the gaseous fluid being in the auxiliary chamber 6a, 6b. The cylinder 100 also comprises closure means linked to the body base 4, which are designed to close the flow duct 20 when the rod 2 reaches the stop position Pp, thereby preventing the passage of a fluid from one chamber to the other. In addition, when the closure means close said flow duct 20 they cause an increase in volume in the main chamber 5, the fluid present in said main chamber 5, the oily fluid, being expanded until the new volume is filled, losing at least part of its pressure. Thus, the stopping force that the fluid of the auxiliary chamber 6a, 6b exerts on the rod 2 in the stop direction S1 may equal or exceed the release force exerted by the fluid of the main chamber 5 on said rod 2 in the release direction S2, thereby preventing any movement or rebounding of said rod in the release direction S2. If the stopping force is equal to the release force, the rod 2 remains in the stop position Pp, if said stopping force exceeds said release force, said rod 2 moves in the stop direction S1, thereby compressing the oily fluid of the main chamber 5, until both forces are equal.

The rod 2 comprises an internal housing 25, a closure piece 22 linked with freedom of axial movement to said rod 2 housed in the housing 25, it being capable of moving axially in said housing 25 in relation to said rod 2. The closure piece 22 extends axially and is hollow, the cavity forming the flow duct 20. Thus, in order to close said flow duct 20, the closure means come into contact with the closure piece 22 to close the cavity of said closure piece 22 and cause, at the same time, an axial movement of said closure piece 22 in relation to the rod 2 in the release direction S2. The main chamber 5 is disposed between the rod 2 and the body base 4, being delimited by an internal surface lc of the cylinder body 1, a lower surface 2a of the rod 2 and an upper surface 4a of the body base 4. A base 22a of said closure piece 22 forms part of the lower surface 2a of the rod 2, so that when said closure piece 22 moves axially in the release direction S2, the volume of said main chamber 5 increases.

The closure piece 22 does not occupy all the housing 25 of the rod 2, leaving a hollow space 6b in said housing 25 communicated with the flow duct 20, where fluid originating from the main chamber 5 may be disposed. In addition, there is a separation gap 6a between the internal surface lc of the cylinder body 1 and an external surface 27a of the rod body 27, said separation gap 6a also being delimited by the stopper means 3 and the rod base 28. The rod 2 comprises at least one connection passage 26 between the hollow space 6b of the housing 25 and the separation gap 6a, said hollow space 6b and said separation gap 6a forming the auxiliary chamber 6a, 6b.

The closure means comprise a closure shaft 40 that is disposed at least partially in the main chamber 5, linked to the body base 4, and which comprises a diameter greater than the diameter of the flow duct 20, covering or closing said flow duct 20 when the rod 2 reaches the stop position Pp. In order to ensure the closure of the flow duct 20, said closure shaft 40 may also comprise a beveled edge 40a, so that said bevelled edge 40a may be inserted at least partially in said flow duct 20 in order to close it, although it may also comprise elastic means, for example, in order to ensure said closure, instead of a beveled edge 40a.

The cylinder 100 comprises displacement means linked to the body base 4, which cause the axial movement of the closure shaft 40 when said rod 2 reaches the stop position Pp, so that when it comes into contact with the flow duct 20, it closes it and causes an axial movement of the closure piece 22. The volume by which the main chamber 5 increases depends therefore on how much said closure piece 22 moves axially, which depends on the requirements of the cylinder 100 during its design. The displacement means comprise a cavity 41 disposed in the body base 4, a displacement support 42 housed in the cavity 41 and an axial displacement hole 43 that connects said cavity 41 to the main chamber 5, thereby causing the axial movement of the displacement support 42 in said cavity 41 towards the rod 2, when said rod 2 reaches the stop position Pp. The closure shaft 40 is fixed to the displacement support 42 and housed in the displacement hole 43, moving in conjunction with said displacement support 42, closing the flow duct 20 and pushing the closure piece 22.

The body base 4 comprises a closure hole 44 connected to a lower surface 41a of the cavity 41, so that when a fluid is introduced in said cavity 41 through said closure hole 44, said fluid acts against the displacement support 42 causing an axial movement of said displacement support 42 towards the rod 2. Said body base 4 also comprises a return hole 45 connected to an upper surface 41b of the cavity 41, so that when a fluid is introduced in said cavity 41 through said return hole 45, said fluid acts against the displacement support 42 causing an axial movement of said displacement support 42, moving away from the rod 2. When a fluid is introduced in the closure hole 44, the fluid present in the cavity 41 on the displacement support 42 may come out of said cavity 41 through the return hole 45 or through another hole specifically for said function, not shown in the figures, said displacement support 42 being capable of moving in order to close the flow duct 20. Similarly, when a fluid is introduced in the return hole 45, the fluid present in the cavity 41 beneath the displacement support 42 may come out of said - cavity 41 through the closure hole 44 or through another hole specifically for said function, not shown in the figures, said displacement support 42 being capable of moving in order to release the flow duct 20. The fluid that is introduced in the holes 44 and 45 is preferably air, the displacement support 42 and the closure shaft 40 acting like a pneumatic cylinder.

The cylinder 100 may also comprise conventional anti-return means 24, which comprise a duct to enable the passage of fluid from the main chamber 5 to the auxiliary chamber 6a, 6b but not in the opposite direction, the aim being that once the flow duct 20 is released from the closure shaft 40, said rod 2 does not suddenly return to the rest position Pr. However, to ensure that said rod 2 may move to said rest position Pr it is necessary that the fluid of the auxiliary chamber 6a, 6b passes to the main chamber 5. To ensure this, the cylinder 100 comprises a choke hole 29 that connects the flow duct 20 to the auxiliary chamber 6a, 6b, the fluid of said auxiliary chamber 6a, 6b passing to the main chamber 5 through the choke hole 29, which comprises a diameter that is substantially smaller than the diameter of the duct of the anti-return means 24. Preferably, the cylinder 100 also comprises a hollow support piece 23 disposed in the housing 25 of the rod 2, which comprises the choke hole 29 and which is fixed without freedom of movement to said rod 2, the anti-return means 24 and the closure piece 22 being housed in its interior. The support piece 23 comprises a transverse base member 23a and an axial extension 23b that extends axially from the transverse base member 23a, said support piece 23 preferably being fixed to the rod 2 by the transverse base member 23a and the housing 25 comprising the hollow space 6b between an external surface 23b' of said axial extension 23b and an internal surface 27b of the rod body 27. The closure piece 22 is housed in the end of the support piece 23 facing the main chamber 5, it being capable of moving axially, while the anti-return means 24 are fixed on the opposite end, without freedom of movement. Between said anti-return means 24 and said closure piece 22 the support piece 23 comprises a gap 30 connected to the hollow space 6b through the choke hole 29.

When the rod 2 moves in the stop direction S1, the fluid of the main chamber 5 passes to the auxiliary chamber 6a, 6b through the flow duct 20, the gap 30 and mainly anti-return means 24, although part of the fluid also passes through the choke hole 29. When the rod 2 moves in the release direction S2, however, the fluid of the auxiliary chamber 6a, 6b passes to the main chamber 5 through the choke hole 29, the gap 30 and the flow duct 20, and does not pass through the anti-return means. As the diameter of said choke hole 29 is very small, the passage of the fluid from said auxiliary chamber 6a, 6b to said main chamber 5 is slow, said rod 2 not moving to the rest position Pr suddenly.

Instead of a support piece 23, the cylinder may comprise anti-return means 24 fixed to the closure piece 22, moving in conjunction with said closure piece 22, said closure piece 22 or said anti-return means 24 comprising the choke hole 29.

## Claims

1. Controlled-stop gas cylinder, comprising
a hollow cylinder body (1),
a body base (4) fixed to a first end (1a) of the cylinder body (1),
a rod (2) inside the cylinder body (1), said rod (2) being axially movable from a rest position (Pr) to a stop position (Pp),
a main chamber (5) with at least one fluid in its interior when the rod (2) is in the rest position (Pr), said fluid exerting a pressure on said rod (2) in order to keep it in said rest position (Pr),
an auxiliary chamber (6a, 6b) independent to the main chamber (5), and
a flow duct (20) to communicate the main chamber (5) with the auxiliary chamber (6a, 6b), the fluid of the main chamber (5) passing through said flow duct (20) to the auxiliary chamber (6a, 6b) when the rod (2) moves towards the stop position (Pp), the fluid present in said auxiliary chamber (6a, 6b) exerting a pressure on said rod (2) against the pressure the fluid of the main chamber (5) exerts on said rod (2),
wherein the flow duct (20) is disposed inside the rod (2), said controlled-stop gas cylinder being **characterised by** :
the main chamber (5) comprising a gaseous fluid and an oily fluid in its interior when the rod (2) is in the rest position (Pr) and comprising only oily fluid when said rod (2) is in the stop position (Pp),
the cylinder (100) comprising closure means linked to the body base (4) and adapted to close the flow duct (20) when the rod (2) reaches the stop position (Pp), also causing an increase in volume of the main chamber (5).

2. Cylinder according to the preceding claim, wherein the rod (2) comprises a housing (25) and a closure piece (22) which is housed in the housing (25), said closure piece (22) being axially movable in said housing (25) in relation to said rod (2), the closure piece (22) comprising the flow duct (20) and the closure means causing the axial movement between said rod (2) and said closure piece (22) when they close the flow duct (20).

3. Cylinder according to any of the preceding claims, wherein the closure means comprise an axial closure shaft (40) that is disposed at least partially in the main chamber (5), which is linked to the body base (4) and which comprises a larger diameter than the diameter of the flow duct (20), so that when the rod (2) reaches the stop position (Pp), the closure piece (22) and the closure shaft (40) come into contact, said closure shaft (40) causing the axial movement of said closure piece (22).

4. Cylinder according to the preceding claim, comprising displacement means that cause the axial movement of the closure shaft (40) when said rod (2) reaches the stop position (Pp), said movement causing the closure of the flow duct (20) and the axial movement of the closure piece (22).

5. Cylinder according to the preceding claim, wherein the displacement means comprise a cavity (41) disposed in the body base (4), a displacement support (42) disposed in the cavity (41) and a displacement hole (43) that communicates said cavity (41) with the main chamber (5), the closure shaft (40) being fixed to the displacement support (42) and housed in said displacement hole (43), and the axial movement of said displacement support (42) in said cavity (41) towards the rod (2) being caused when said rod (2) moves to the stop position (Pp), said closure shaft (40) moving in conjunction with said displacement support (42).

6. Cylinder according to the preceding claim, wherein the body base (4) comprises a closure hole (44) connected to a lower surface (41a) of the cavity (41), so that, when a fluid is introduced into said cavity (41) through said closure hole (44), said fluid acts against the displacement support (42), causing an axial movement of said displacement support (42) towards the rod (2).

7. Cylinder according to any of claims 5 or 6, wherein the body base (4) comprises a return hole (45) connected to an upper surface (41b) of the cavity (41), so that, when a fluid is introduced into said cavity (41) through said return hole (45), said fluid acts against the displacement support (42), causing an axial movement of said displacement support (42) away from the rod (2).

8. Cylinder according to any of claims 3 to 7, wherein the closure shaft (40) comprises a beveled edge (40a), so that, when the closure piece (22) and said closure shaft (40) come into contact, the beveled edge (40a) is inserted in the flow duct (20), thereby closing it.

9. Cylinder according to any of claims 2 to 8, comprising anti-return means (24) with a duct that allows the passage of fluid from the flow duct (20) to the auxiliary chamber (6a, 6b) but not in the opposite direction, said duct being connected to the flow duct (20) of the rod (2), and the cylinder (100) comprising a choke hole (29) that connects said flow duct (20) to the auxiliary chamber (6a, 6b), the fluid of said auxiliary chamber (6a, 6b) passing to the main chamber (5) through the choke hole (29).

10. Cylinder according to the preceding claim, wherein the anti-return means (24) are fixed to the closure piece (22), moving in conjunction with said closure piece (22), said closure piece (22) or said anti-return means (24) comprising the choke hole (29).

11. Cylinder according to claim 9, comprising a support piece (23) disposed in the housing (25) of the rod (2), fixed without freedom of movement to said rod (2), the closure piece (22) and the anti-return means (24) being housed in the support piece (23), and said support piece (23) comprising a gap (30) between said anti-return means (24) and said closure piece (22), and a choke hole (29) to connect the gap (30) with the auxiliary chamber (6a, 6b).

12. Cylinder according to any of claims 9 to 11, wherein the diameter of the choke hole (29) is smaller than the diameter of the duct of the anti-return means (24).

## Patentansprüche

1. Gaszylinder mit kontrolliertem Stopp, umfassend
einen hohlen Zylinderkörper (1),
eine Körperbasis (4), die an einem ersten Ende (1a) des Zylinderkörpers (1) befestigt ist,
eine Stange (2) innerhalb des Zylinderkörpers (1), wobei die Stange (2) axial aus einer Ruheposition (Pr) in eine Stoppposition (Pp) bewegbar ist,
eine Hauptkammer (5), die zumindest eine Flüssigkeit in ihrem Inneren aufweist, wenn sich die Stange (2) in der Ruheposition (Pr) befindet, wobei die Flüssigkeit einen Druck auf die Stange (2) ausübt, um diese in der Ruheposition (Pr) zu halten,
eine Hilfskammer (6a, 6b), die von der Hauptkammer (5) unabhängig ist, und
einen Strömungskanal (20), um die Hauptkammer (5) mit der Hilfskammer (6a, 6b) zu verbinden, wobei die Flüssigkeit der Hauptkammer (5) durch den Strömungskanal (20) zur Hilfskammer (6a, 6b) gelangt, wenn sich die Stange (2) in Richtung Stoppposition (Pp) bewegt, wobei die in der Hilfskammer (6a, 6b) befindliche Flüssigkeit einen Druck auf die Stange (2) gegen den Druck ausübt, den die Flüssigkeit der Hauptkammer (5) auf die Stange (2) ausübt,
wobei der Strömungskanal (20) innerhalb der Stange (2) angeordnet ist, wobei der Gaszylinder mit kontrolliertem Stopp **dadurch gekennzeichnet ist, dass**:
die Hauptkammer (5) eine gasförmige Flüssigkeit und eine ölförmige Flüssigkeit in ihrem Inneren umfasst, wenn sich die Stange (2) in der Ruheposition (Pr) befindet, und nur ölige Flüssigkeit umfasst, wenn sich die Stange (2) in der Stoppposition (Pp) befindet,
der Zylinder (100) Verschlussmittel umfasst, die mit der Körperbasis (4) verbunden und eingerichtet sind, um den Strömungskanal (20) zu schließen, wenn die Stange (2) die Stoppposition (Pp) erreicht, wodurch auch eine Steigerung des Volumens der Hauptkammer (5) bewirkt wird.

2. Zylinder nach dem vorstehenden Anspruch, wobei die Stange (2) ein Gehäuse (25) und ein Verschlussstück (22) umfasst, das sich im Gehäuse (25) befindet, wobei das Verschlussstück (22) im Gehäuse (25) axial in Bezug auf die Stange (2) bewegbar ist, wobei das Verschlussstück (22) den Strömungskanal (20) umfasst, und die Verschlussmittel die axiale Bewegung zwischen der Stange (2) und dem Verschlussstück (22) bewirken, wenn diese den Strömungskanal (20) schließen.

3. Zylinder nach einem der vorstehenden Ansprüche, wobei die Verschlussmittel eine axiale Verschlusswelle (40) umfassen, die zumindest teilweise in der Hauptkammer (5) angeordnet ist, die mit der Körperbasis (4) verbunden ist und einen größeren Durchmesser als der Durchmesser des Strömungskanals (20) aufweist, so dass das Verschlussstück (22) und die Verschlusswelle (40) in Kontakt gelangen, wenn die Stange (2) die Stoppposition (Pp) erreicht, wobei die Verschlusswelle (40) die axiale Bewegung des Verschlussstücks (22) bewirkt.

4. Zylinder nach dem vorstehenden Anspruch, umfassend Verschiebemittel, die die axiale Bewegung der Verschlusswelle (40) bewirken, wenn die Stange (2) die Stoppposition (Pp) erreicht, wobei die Bewegung den Verschluss des Strömungskanals (20) und die axiale Bewegung des Verschlussstücks (22) bewirkt.

5. Zylinder nach dem vorstehenden Anspruch, wobei die Verschiebemittel einen in der Körperbasis (4) angeordneten Hohlraum (41), einen im Hohlraum (41) angeordneten Verschiebeträger (42) und ein Verschiebeöffnung (43) umfasst, die den Hohlraum (41) mit der Hauptkammer (5) verbindet, wobei die Verschlusswelle (40) am Verschiebeträger (42) befestigt und in der Verschiebeöffnung (43) angeordnet ist, und wobei die axiale Bewegung des Verschiebeträgers (42) im Hohlraum (41) in Richtung der Stange (2) bewirkt wird, wenn sich die Stange (2) in die Stoppposition (Pp) bewegt, wobei sich die Verschlusswelle (40) in Verbindung mit dem Verschiebeträger (42) bewegt.

6. Zylinder nach dem vorstehenden Anspruch, wobei die Körperbasis (4) eine Verschlussöffnung (44) umfasst, die mit einer Unterseite (41a) des Hohlraums (41) verbunden ist, so dass, wenn eine Flüssigkeit durch die Verschlussöffnung (44) in den Hohlraum (41) eingebracht wird, die Flüssigkeit gegen den Verschiebeträger (42) wirkt, wodurch eine axiale Bewegung des Verschiebeträgers (42) in Richtung der Stange (2) bewirkt wird.

7. Zylinder nach einem der Ansprüche 5 oder 6, wobei die Körperbasis (4) eine Rücklauföffnung (45) umfasst, die mit einer Oberseite (41b) des Hohlraums (41) verbunden ist, so dass, wenn eine Flüssigkeit über die Rücklauföffnung (45) in den Hohlraum (41) eingebracht wird, die Flüssigkeit gegen den Verschiebeträger (42) wirkt, wodurch eine axiale Bewegung des Verschiebeträgers (42) weg von der Stange (2) bewirkt wird.

8. Zylinder nach einem der Ansprüche 3 bis 7, wobei die Verschlusswelle (40) eine abgeschrägte Kante (40a) umfasst, so dass, wenn das Verschlussstück (22) und die Verschlusswelle (40) in Kontakt gelangen, die abgeschrägte Kante (40a) in den Strömungskanal (20) eingesetzt und dieser dadurch verschlossen wird.

9. Zylinder nach einem der Ansprüche 2 bis 8, umfassend Anti-Rücklaufmittel (24) mit einem Kanal, der den Durchlauf von Flüssigkeit aus dem Strömungskanal (20) zur Hilfskammer (6a, 6b), aber nicht in die entgegengesetzte Richtung ermöglicht, wobei der Kanal mit dem Strömungskanal (20) der Stange (2) verbunden ist, und wobei der Zylinder (100) eine Drosselöffnung (29) umfasst, die den Strömungskanal (20) mit der Hilfskammer (6a, 6b) verbindet, wobei die Flüssigkeit der Hilfskammer (6a, 6b) durch die Drosselöffnung (29) zur Hauptkammer (5) gelangt.

10. Zylinder nach dem vorstehenden Anspruch, wobei die Anti-Rücklaufmittel (24) am Verschlussstück (22) befestigt sind und sich in Verbindung mit dem Verschlussstück (22) bewegen, wobei das Verschlussstück (22) oder die Anti-Rücklaufmittel (24) die Drosselöffnung (29) umfasst bzw. umfassen.

11. Zylinder nach Anspruch 9, umfassend ein Trägerstück (23), das im Gehäuse (25) der Stange (2) angeordnet ist, das ohne Bewegungsfreiheit an der Stange (2) befestigt ist, wobei das Verschlussstück (22) und die Anti-Rücklaufmittel (24) im Trägerstück (23) angeordnet sind, und das Trägerstück (23) einen Spalt (30) zwischen den Anti-Rücklaufmitteln (24) und dem Verschlussstück (22) sowie eine Drosselöffnung (29) umfasst, um den Spalt (30) mit der Hilfskammer (6a, 6b) zu verbinden.

12. Zylinder nach einem der Ansprüche 9 bis 11, wobei der Durchmesser der Drosselöffnung (29) kleiner als der Durchmesser des Kanals der Anti-Rücklaufmittel (24) ist.

## Revendications

1. Bouteille à gaz à arrêt commandé, comprenant :
un corps cylindrique creux (1),
une base de corps (4) fixée sur une première extrémité (1a) du corps cylindrique (1),
une tige (2) à l'intérieur du corps cylindrique (1), ladite tige (2) étant axialement mobile, d'une position de repos (Pr) à une position d'arrêt (Pp),
une chambre principale (5) avec au moins un fluide dans son intérieur lorsque la tige (2) est dans la position de repos (Pr), ledit fluide exerçant une pression sur ladite tige (2) afin de la maintenir dans ladite position de repos (Pr),
une chambre auxiliaire (6a, 6b) indépendante de la chambre principale (5), et
un conduit d'écoulement (20) pour faire communiquer la chambre principale (5) avec la chambre auxiliaire (6a, 6b), le fluide de la chambre principale (5) passant par ledit conduit d'écoulement (20) jusqu'à la chambre auxiliaire (6a, 6b) lorsque la tige (2) se déplace vers la position d'arrêt (Pp), le fluide présent dans ladite chambre auxiliaire (6a, 6b) exerçant une pression sur ladite tige (2) contre la pression que le fluide de la chambre principale (5) exerce sur ladite tige (2),
dans laquelle le conduit d'écoulement (20) est disposé à l'intérieur de la tige (2), ladite bouteille à gaz à arrêt commandé étant **caractérisée par** :
la chambre principale (5) comprenant un fluide gazeux et un fluide huileux dans son intérieur lorsque la tige (2) est dans la position de repos (Pr) et comprenant uniquement le fluide huileux lorsque ladite tige (2) est dans la position d'arrêt (Pp),
la bouteille (100) comprenant des moyens de fermeture reliés à la base de corps (4) et adaptés pour fermer le conduit d'écoulement (20) lorsque la tige (2) atteint la position d'arrêt (Pp), provoquant également une augmentation du volume de la chambre principale (5).

2. Bouteille selon la revendication précédente, dans laquelle la tige (2) comprend un boîtier (25) et une pièce de fermeture (22) qui est logée dans le boîtier (25), ladite pièce de fermeture (22) étant axialement mobile dans ledit boîtier (25) par rapport à ladite tige (2), la pièce de fermeture (22) comprenant le conduit d'écoulement (20) et les moyens de fermeture provoquant le mouvement axial entre ladite tige (2) et ladite pièce de fermeture (22) lorsqu'ils ferment le conduit d'écoulement (20).

3. Bouteille selon l'une quelconque des revendications précédentes, dans laquelle les moyens de fermeture comprennent une tige de fermeture axiale (40) qui est disposée au moins partiellement dans la chambre principale (5) qui est reliée à la base de corps (4) et qui comprend un plus grand diamètre que le diamètre du conduit d'écoulement (20), de sorte que lorsque la tige (2) atteint la position d'arrêt (Pp), la pièce de fermeture (22) et la tige de fermeture (40) entrent en contact, ladite tige de fermeture (40) provoquant le mouvement axial de ladite pièce de fermeture (22).

4. Bouteille selon la revendication précédente, comprenant des moyens de déplacement qui provoquent le mouvement axial de la tige de fermeture (40) lorsque ladite tige (2) atteint la position d'arrêt (Pp), ledit mouvement provoquant la fermeture du conduit d'écoulement (20) et le mouvement axial de la pièce de fermeture (22).

5. Bouteille selon la revendication précédente, dans laquelle les moyens de déplacement comprennent une cavité (41) disposée dans la base de corps (4), un support de déplacement (42) disposé dans la cavité (41) et un trou de déplacement (43) qui fait communiquer ladite cavité (41) avec la chambre principale (5), la tige de fermeture (40) étant fixée sur le support de déplacement (42) et logée dans ledit trou de déplacement (43), et le mouvement axial dudit support de déplacement (42) dans ladite cavité (41) vers la tige (2) étant provoqué lorsque ladite tige (2) se déplace vers la position d'arrêt (Pp), ladite tige de fermeture (40) se déplaçant conjointement avec ledit support de déplacement (42).

6. Bouteille selon la revendication précédente, dans laquelle la base de corps (4) comprend un trou de fermeture (44) raccordé à une surface inférieure (41a) de la cavité (41), de sorte que lorsqu'un fluide est introduit dans ladite cavité (41) par ledit trou de fermeture (44), ledit fluide agit contre le support de déplacement (42), provoquant un mouvement axial dudit support de déplacement (42) vers la tige (2).

7. Bouteille selon l'une quelconque des revendications 5 ou 6, dans laquelle la base de corps (4) comprend un trou de retour (45) raccordé à une surface supérieure (41b) de la cavité (41), de sorte que lorsqu'un fluide est introduit dans ladite cavité (41) par ledit trou de retour (45), ledit fluide agit contre le support de déplacement (42), provoquant un mouvement axial dudit support de déplacement (42) à distance de la tige (2).

8. Bouteille selon l'une quelconque des revendications 3 à 7, dans laquelle la tige de fermeture (40) comprend un bord biseauté (40a) de sorte que lorsque la pièce de fermeture (22) et ladite tige de fermeture (40) entrent en contact, le bord biseauté (40a) est inséré dans le conduit d'écoulement (20), le fermant ainsi.

9. Bouteille selon l'une quelconque des revendications 2 à 8, comprenant des moyens de non retour (24) avec un conduit qui permet le passage du fluide, du conduit d'écoulement (20) à la chambre auxiliaire (6a, 6b), mais pas dans la direction opposée, ledit conduit étant raccordé au conduit d'écoulement (20) de la tige (2) et la bouteille (100) comprenant un trou d'étranglement (29) qui raccorde ledit conduit d'écoulement (20) à la chambre auxiliaire (6a, 6b), le fluide de ladite chambre auxiliaire (6a, 6b) passant vers la chambre principale (5) par le trou d'étranglement (29).

10. Bouteille selon la revendication précédente, dans laquelle les moyens de non retour (24) sont fixés sur la pièce de fermeture (22), se déplaçant conjointement avec ladite pièce de fermeture (22), ladite pièce de fermeture (22) ou lesdits moyens de non retour (24) comprenant le trou d'étranglement (29).

11. Bouteille selon la revendication 9, comprenant une pièce de support (23) disposée dans le boîtier (25) de la tige (2), fixée sans liberté de mouvement, à ladite tige (2), la pièce de fermeture (22) et les moyens de non retour (24) étant logés dans la pièce de support (23) et ladite pièce de support (23) comprenant un espace (30) entre lesdits moyens de non retour (24) et ladite pièce de fermeture (22) et un trou d'étranglement (29) pour raccorder l'espace (30) avec la chambre auxiliaire (6a, 6b).

12. Bouteille selon l'une quelconque des revendications 9 à 11, dans laquelle le diamètre du trou d'étranglement (29) est plus petit que le diamètre du conduit des moyens de non retour (24).
